Europäisches Patentamt

(19) European Patent Office

Office européen des brevets

(11) Veröffentlichungsnummer: **0 055 385 B1**

(12) **EUROPÄISCHE PATENTSCHRIFT**

(45) Veröffentlichungstag der Patentschrift:
27.12.85

(21) Anmeldenummer: **81109342.6**

(22) Anmeldetag: **30.10.81**

(51) Int. Cl.⁴: **A 01 G 25/06**

(54) **System für unterirdische Bewässerung oder Tränkung von Böden und dessen Verwendung.**

(30) Priorität: **31.12.80 DE 3049558**

(43) Veröffentlichungstag der Anmeldung:
**07.07.82 Patentblatt 82/27**

(45) Bekanntmachung des Hinweises auf die Patenterteilung:
**27.12.85 Patentblatt 85/52**

(84) Benannte Vertragsstaaten:
**AT BE CH FR GB IT LI LU NL**

(56) Entgegenhaltungen:
**FR - A - 2 340 416
US - A - 2 653 449
US - A - 4 019 326**

(73) Patentinhaber: **Akzo GmbH,
Postfach 10 01 49 Kasinostrasse 19-23,
D-5600 Wuppertal-1 (DE)**

(72) Erfinder: **Stöhr, Helmut, Dr. Dipl.-Chem.,
Jägerhofstrasse 43, D-5600 Wuppertal 1 (DE)**
Erfinder: **Ostertag, Karl, Dr. Dipl.-Ing., Dr.
Jordanstrasse 2, D-8765 Erlenbach (DE)**

**Beschreibung**

Die Erfindung betrifft ein System für die künstliche unterirdische Bewässerung bzw. Tränkung von Böden mit flexiblen Schläuchen aus porösem Material.

Es ist bekannt, Böden mit Hilfe von unterirdisch verlegten Rohren oder Schläuchen zu bewässern oder zu tränken.

So werden in der DE-B-1 759 909 Rohre aus Kunstharzen für die Bewässerung oder Tränkung von Böden beschrieben, die aus blähbarem Schaumkunstoff bestehen und deren Außenfläche eine im wesentlichen undurchlässige Haut ist, in welcher in entsprechenden Abständen voneinander Öffnungen angeordnet sind. Um diese Öffnungen zu erhalten, muß die Haut mit Einschnitten oder Einstichen versehen werden.

Von Nachteil ist, daß es äußerst schwierig ist, diesen Einschnitten bzw. Einstichen exakt genau die gewünschte Größe und Tiefe zu geben. So läßt es sich nicht vermeiden, daß aus den Öffnungen, die zu tief oder zu groß geraten sind, unerwünscht viel Wasser aus dem Bewässerungsrohr entweicht, so daß es an dieser Stelle im Boden zu Überschwemmungen kommen kann oder daß andere Stellen mit zu wenig Wasser versorgt werden. Auch neigen derartige Öffnungen dazu, leicht infolge des Eindringens von Erdreich oder Pflanzenwurzeln zu verstopfen.

Dazu kommt, daß Schaumstoffe, die nach den üblichen mit Blähmittel arbeitenden Verfahren hergestellt sind, wenig geeignet sind, für eine kontrollierte Wasserabgabe zu sorgen, da einerseits die Struktur der Hohlräume sehr unregelmäßig ist, zum anderen diese Strukturen sehr stark auf Druckänderungen reagieren.

Auch besteht, wie der US-A-2 807 505 zu entnehmen ist, bei Rohren mit Schaumstruktur die Gefahr, daß die Rohre, wenn sie nicht mit Wasser gefüllt sind, zusammenfallen, so daß man gezwungen ist, die Rohre entweder ständig unter Druck zu halten oder die Wandstärke zu erhöhen, was dann wieder zu Schwierigkeiten bei der Wasserabgabe führen kann. Von Nachteil bei diesen Rohren ist auch die runzlige Oberfläche.

In der DE-A-1 954 748 wird ein flexibles kontinuierliches poröses Rohr beschrieben, das zur Verteilung von Wasser auf Grünflächen dienen soll. Dieses Rohr, das durch Flechten, Verfilzen oder Weben von Fasern hergestellt wird, soll eine Porösität aufweisen, die in der Nähe der Wasserzuführung am kleinsten und am Ende des Rohres am größten ist. Die Herstellung derartiger Rohre ist äußerst kompliziert. Darüber hinaus läßt sich durch Weben, Flechten u. dgl. von Fäden oder Fasern eine konstante oder eine kontinuierlich abnehmende Porösität nur unter größten Schwierigkeiten erreichen; bei geringsten Fehlern in der Gewebekonstruktion entstehen größere Öffnungen, durch die das Wasser ungehindert in das Erdreich eindringen kann, so daß es auch bei dieser Art von Rohren zu ähnlichen Problemen kommt, wie sie bereits weiter oben erwähnt wurden.

In der DE-A-2 642 623 wird ein Schlauch für Berieselungszwecke, insbesondere für Tröpfchen- oder Unterfeldbewässerung beschrieben, dessen Querschnitt angenähert Spiralform hat. Die Enden der Spirale sind durch einen dehnbaren Längssteg verbunden, der im drucklosen Zustand des Schlauches geschlossen ist und angenähert radial verläuft und bei zunehmendem Innendruck in Richtung einer peripheren Lage gebogen wird. In Längsabständen ist in den Steg jeweils ein Ausflußkanal angeordnet, durch den bei entsprechendem Druck Wasser in das Erdreich gelangen soll. Abgesehen von der Tatsache, daß derartige Konstruktionen kompliziert sind, wird die Funktionsweise derartiger Bewässerungsrohre stark gefährdet, wenn die Rohre im Erdreich, z. B. durch Steine oder komprimierte Erdmassen derart eingeklemmt sind, daß sich das Rohr bei zunehmendem Innendruck nicht ausdehnen kann.

Ein solches System erlaubt nur eine punktförmige Bewässerung und keine gleichmäßige kontinuierliche Bewässerung an allen Stellen entlang des Rohres; im übrigen ist auch hier Verstopfungsgefahr gegeben.

Die US-A-2 653 449 beschreibt ein Bewässerungssystem, das aus starren Rohren besteht. Das Material für diese Rohre ist vorzugsweise Portlandzement, der in seinen Eigenschaften völlig von synthetischem Material abweicht. Zwar sollen die in der US-A-2 653 449 beschriebenen Rohre porös sein; da der Wasseraustritt jedoch stark druckabhängig ist, sind zusätzliche Öffnungen in den Rohren vorgesehen.

Obwohl bereits eine größere Anzahl von Vorrichtungen zur unterirdischen Bewässerung bekannt sind, besteht noch ein Bedürfnis nach verbesserten Systemen für die unterirdische Bewässerung und Tränkung von Böden, welche die oben erwähnten Nachteile nicht aufweisen.

Aufgabe der Erfindung ist es deshalb, ein System für die künstliche unterirdische Bewässerung oder Tränkung von Böden mit flexiblen Schläuchen zur Verfügung zu stellen, das eine gleichmäßige, konstante sparsame und ökonomische Bewässerung oder Tränkung von Böden erlaubt, das unempfindlich gegenüber Druckschwankungen im Erdreich ist, das nicht zur Verstopfung neigt und das auf einfache Weise zu bedienen ist.

Diese Aufgabe wird gelöst durch ein System für die künstliche unterirdische Bewässerung oder Tränkung von Böden mit flexiblen Schläuchen aus porösem Material, das gekennzeichnet ist durch Schläuche aus synthetischen Polymeren mit einer nicht expandierten porösen Innenstruktur, bei der im wesentlichen sphärische Zellen eines mittleren Durchmessers von etwa 0,5 bis etwa 100 µm gleichmäßig in der ganzen Struktur verteilt sind, wobei die angrenzenden Zellen untereinander durch Poren verbunden sind, die einen kleineren Durchmesser aufweisen als die besagten Zellen und das Verhältnis des durchschnittlichen Zellendurchmessers zum durchschnittlichen Porendurchmesser etwa 2 : 1 bis etwa 200 : 1 beträgt.

Sehr geeignet sind Schläuche mit einer solchen Innenstruktur, die erhalten worden sind durch Extrusion eines homogenen Gemisches aus mindestens 2 Komponenten, wobei die eine Komponente ein schmelzbares Polymer und die andere Komponente eine gegenüber dem Polymeren inerte Flüssigkeit ist und beide Komponenten ein binäres System bilden, das im flüssigen Aggregatzustand einen Bereich völliger Mischbarkeit und einen Bereich mit Mischungslücke aufweist.

In einer besonders vorteilhaften Ausführungsform der Erfindung besitzen die Schläuche mit der nicht expandierten porösen Innenstruktur eine Innenwandoberfläche mit offenen Poren und offenen sphärischen Zellen (Hohlräume) und eine Außenwandoberfläche, deren Öffnungsgrad, berechnet als Anteil offener Fläche gegenüber der Innenwandoberfläche um mindestens 20% reduziert ist.

Es ist günstig, wenn die Hohlräume auf der Außenwandoberfläche zum größten Teil einen Hohlraumdurchmesser von weniger als 4 µm vorzugsweise weniger als 3 µm aufweisen.

Das Hohlraumvolumen der Schläuche beträgt 50 bis 90%, vorzugsweise 70 bis 80%. Ein geeignetes synthetisches Polymer für die Schläuche ist Polypropylen. Das Polypropylen kann auch mit Glasfasern verstärkt sein.

Geeignete Wandstärken der Schläuche sind etwa 0,5 bis 2,5 mm, vorzugsweise 1 bis 1,5 mm; der Außendurchmesser liegt zweckmäßig etwa zwischen 2,5 und 25 mm, vorzugsweise zwischen etwa 7 und 12 mm. Es können auch z. B. bei sehr langen Schläuchen größere Durchmesser und Wandstärken genommen werden.

In einer besonders vorteilhaften Ausführungsform der Erfindung sind die Schläuche in rohrförmig ausgestalteten Schutzhüllen angeordnet, die aus einer Mattenbahn hergestellt worden sind, die aus einer Vielzahl von aus synthetischen Polymeren schmelzgesponnenen, sich stellenweise überkreuzenden und an den Kreuzungsstellen miteinander verschweißten Fäden besteht. Die Schutzhüllen können aus einer Mattenbahn mit Längsrillenprofil hergestellt worden sein. Vorzugsweise besteht die Mattenbahn aus Polycaprolactamfäden mit einem Durchmesser von ca. 0,2 bis 1,5 mm. Günstig ist es, wenn die Schutzhülle an den Stoßstellen mit Muffen versehen sind, die zweckmäßig aus dem gleichen Material wie die Schutzhüllen bestehen.

Das System ist besonders geeignet zur Bewässerung von Rasen, zur Bewässerung in mehreren Schichten und zur Permanentbewässerung in ariden Zonen.

Es kann auch zum Verteilen von Düngemitteln, Herbiziden und Schädlingsbekämpfungsmitteln u. dgl. verwendet werden.

Nicht expandiert bedeutet im Rahmen der Erfindung, daß die Poren bzw. Hohlräume im porösen Material nicht unter der Verwendung von üblichen Blähmitteln oder Gasen, wie es bei den Schaumstoffen der Fall ist erzeugt worden sind.

Unter Hohlräumen im Material sind hier sphärische Zellen sowie Poren gleich welcher Geometrie zu verstehen, es kann sich dabei um kugelförmige, zellenartige, längliche, regelmäßig oder unregelmäßig geformte Hohlräume handeln, die mehr oder weniger miteinander in Verbindung stehen. Unter Durchmesser eines Hohlraums soll der Durchmesser einer volumengleichen Kugel zu verstehen sein. Hohlraumstrukturen, wie sie im Inneren der erfindungsgemäßen Schläuche vorliegen, sind auch in den Polymerstrukturen zu finden, die in der DE-A-2 737 745 beschrieben werden.

Die Herstellung von Schläuchen, wie sie gemäß der Erfindung zum Einsatz gelangen, kann auf folgende Weise erfolgen:

Man stellt aus einem Polymeren und einem Lösungsmittel, das gegenüber dem Polymer eine inerte Flüssigkeit darstellt und wobei beide Komponenten, d. h. die Flüssigkeit und das Polymer, ein binäres System bilden, das im flüssigen Aggregatzustand einen Bereich völliger Mischbarkeit und einen Bereich mit Mischungslücke aufweist, zunächst ein einphasiges flüssiges Gemisch her.

Derartige, geeignete Kombinationen von Polymeren und inerten Flüssigkeiten können der DE-A-2 737 745 entnommen werden. Ein besonders günstiges Gemisch besteht aus Polypropylen und NN-bis(2-Hydroxyäthyl)hexadecylamin.

Ein derartiges flüssiges einphasiges Gemisch wird sodann durch eine geeignete Düse, mit der Schläuche oder Röhrchen hergestellt werden können, in ein Bad extrudiert, in dem das Polymer erstarrt. Als Badflüssigkeit kann z. B. Wasser oder Alkohol dienen.

Es ist zweckmäßig, wenn die zu extrudierende Masse von unten nach oben durch das Spinnbad geführt wird, das heißt die Düse befindet sich innerhalb des Fällbades, z. B. am Boden einer geeigneten Vorrichtung und der heraustretende Schlauch wird von unten nach oben durch das Bad abgezogen und nach Verlassen des Bades entsprechend weitergeleitet.

Die Düse, über der die Koagulationsflüssigkeit steht, wird in geeigneter Weise gegen das Spinnbad wärmeisoliert, damit nicht bereits innerhalb der Düse eine Verfestigung des Polymeren stattfinden kann.

Die im Rahmen einer besonders vorteilhaften Ausführungsform der Erfindung eingesetzten Schutzhüllen aus einer Mattenbahn können auf einfache Weise hergestellt werden. Man stellt zunächst eine entsprechende Mattenbahn her, wobei ein Verfahren dienen kann, das in der DE-A-2 530 499 näher beschrieben wird. Die Matten, welche entweder direkt mit entsprechender Breite hergestellt werden oder durch Schneiden von größeren Mattenbahnen auf eine zweckmäßige Breite gearbeitet werden, werden sodann beispielsweise durch Ziehen durch eine rohrförmige Düse zu einem rohrförmigen Gebilde geformt, das an der Stelle, wo die beiden Seiten der Matte aneinanderstoßen, verschweißt wird.

Es ist möglich, die Schläuche sodann in die rohrförmige Umhüllung einzuziehen und die rohrförmige Umhüllung zusammen mit dem Schlauch ins Erdreich zu verlegen. Man kann jedoch auch zunächst die rohrförmigen Schutzhüllen in das Erdreich verlegen und die Schläuche zu einem späteren Zeitpunkt in die Umhüllung einführen.

Zweckmäßigerweise werden die Schutzhüllen an ihren Stoßstellen mit einer Muffe versehen, welche die Umhüllungen zusammenhält. Eine entsprechende Ausführungsform wird in der schematischen Figur näher erläutert. Dabei bedeuten 1 der zur Bewässerung dienende poröse Schlauch, 2 und 3 zwei Schutzhüllen, die an der Stoßstelle 4 zusammenstoßen und 5 eine Muffe, die die beiden Schutzhüllen miteinander verbindet.

Die Schläuche können zur unterirdischen Bewässerung allein oder mit einer entsprechenden Schutzhülle versehen ins Erdreich gelegt werden. Das Füllen mit Wasser kann auf einfache Weise geschehen. So reicht es in vielen Fällen aus, daß man an den Schläuchen bzw. über eine entsprechende Schlauchverbindung ein mit Wasser gefülltes Gefäß anschließt. Der hydrostatische Druck, der sich sodann in den Schläuchen einstellt, ist ausreichend genug, um für eine gleichmäßige kontinuierliche Verteilung von Wasser im Erdreich zu sorgen.

Vielfach reicht es sogar aus, daß man entsprechend der Menge Wasser, die man im Erdreich verteilen will, mit Hilfe einer einfachen Tropfvorrichtung das Wasser in das Schlauchsystem eintropfen läßt. Dabei kann der Einlaß des Schlauches mit einem entsprechenden Trichter versehen sein. Man kann auch ein zur Düse ausgezogenes Rohr oder ein Glasrohr in den Schlauch einführen und für die Zufuhr einer bestimmten Anzahl von Tropfen je Zeiteinheit Sorge tragen.

Die Schläuche können je nach Verwendungszweck mehr oder weniger tief ins Erdreich verlegt werden. So reicht es bei der Bewässerung von Rasen aus, wenn die Schläuche in einer Tiefe von etwa 5 bis 10 cm verlegt werden.

Sollen Böden bewässert werden, auf denen Pflanzen gezogen werden sollen, deren Wurzeln wesentlich tiefer reichen, ist es selbstverständlich möglich, die Schläuche auch wesentlich tiefer im Erdreich zu verlegen. Es versteht sich von selbst, daß die Schläuche parallel in bestimmten Abständen nebeneinander verlegt werden können. Dabei hängt der Abstand der einzelnen Schläuche vom einzelnen Bewässerungsproblem ab, je nachdem, wieviel Wasser benötigt wird und wie intensiv die Bewässerung sein soll. So kann z. B. bei Bewässerung von Rasen der Abstand zwischen den einzelnen Schläuchen, beispielsweise etwa 20—30 cm betragen. Dabei sind, je nach den örtlichen Verhältnissen und der Bodenbeschaffenheit, auch größere oder kleinere Abstände geeignet. Die parallel angeordneten Schläuche können von einer Wasserquelle versorgt werden.

Je nach Bewässerungsproblem kann man Schläuche auch übereinander legen und sie in mehreren Schichten im Boden verteilen, so daß beispielsweise 3 oder 4 Schichten direkt mit Wasser versorgt werden, die z. B. in 10, 20, 30 und 40 cm Abstand von der Erdoberfläche entfernt liegen. Solche Anordnungen sind für Mischkulturen sehr geeignet.

Bei Bewässerungen von Pflanzen, z. B. Bäumen, die im Erdreich ein kegelförmiges Wurzelwerk entfalten, kann man die Bewässerung durch entsprechende kegelförmige Verteilung der Schläuche im Erdreich so gestalten, daß auf diese Weise eine optimale Zuführung von Feuchtigkeit an das Wurzelwerk stattfindet.

Die Schläuche gemäß der Erfindung eignen sich nicht nur für die Bewässerung von kleineren Rasenflächen, wie sie an Wohnhäusern üblich sind, es können auch größere Rasenanlagen, z. B. von Golfanlagen, Sportplätzen und Fußballstadien mit Wasser versorgt werden. Auch Wiesen und Weiden können entsprechend bewässert werden.

Gemäß der Erfindung lassen sich auch Ackerböden, Plantagen mit mehrjährigem Bestand, Böden in Treibhäusern, Großgartenanlagen für Blumen und Gemüse, Weinberge u. dgl. bewässern. In manchen Fällen kann man die Schläuche beim Pflügen direkt mitverlegen.

Ein Einsatz bestimmter Polymerer, die sehr stark hydrophob sind, z. B. Polypropylen, kann es erforderlich sein, daß zu Beginn der Bewässerung das Innere des Schlauches zwecks Hydrophilierung mit einer geeigneten Flüssigkeit, wie z. B. Äthylalkohol oder einer Lösung eines Netzmittels vorbehandelt wird, damit eine bessere Benetzung im Innern des Schlauches durch Wasser stattfindet. Vielfach reicht es auch aus, das System mit einem höheren Druck z. B. 1,5 bar anzufahren. Dazu reicht der übliche Wasserleitungsdruck von ca. 6 bar völlig aus.

Es war besonders überraschend, daß sich mit Hilfe der Erfindung eine unterirdische künstliche Bewässerung auf hervorragende Weise durchführen läßt. Man kann auf diese Weise eine gleichmäßige Zufuhr von Wasser auf einer größeren Fläche gewährleisten, da aufgrund des besonderen Verteilungsmechanismus kein nennenswerter Druckabfall in den Rohren stattfindet. Das Innere des Schlauches ist nämlich konstant mehr oder weniger mit Wasser gefüllt und gibt langsam und gleichmäßig wegen des feinen, kapillarartigen Porensystems das Wasser ins Erdreich ab. Es kann nicht vorkommen, daß beispielsweise am Anfang des Schlauches wesentlich mehr Wasser austritt als am Ende des Schlauches. Unkontrolliertes Austreten von Wasser an bestimmten Stellen, das zum Wegspülen von Erdreich oder sogar zu Überschwemmungen an bestimmten Stellen führt, tritt nicht auf.

Aufgrund der speziellen Oberflächenstruktur der Schläuche findet ein Verstopfen der Schläuche durch eintretendes Erdreich, Schlick, Bakterien oder feinen Wurzeln nicht statt, so daß die Schläuche über eine sehr lange Zeit zur Bewässerung verwendet werden können.

Sie können sowohl bei einjährigen als auch bei mehrjährigen Kulturen eingesetzt werden. Besonders vorteilhaft ist, daß man die Schläuche bei Verwendung der Schutzhüllen nach einer bestimmten Zeit herausziehen kann und sie gegebenenfalls durch andere Schläuche ersetzen kann.

Aufgrund der feinen Poren auf der Oberfläche der Schläuche wird das Wasser in besonders feiner aktiver Form an das Erdreich weitergegeben. Dies bewirkt einmal, daß das Wasser in einer sehr wirksamen Form an die Wurzeln direkt abgegeben wird, zum anderen, daß die Bewässerung äußerst sparsam, und effektiv ist, was nicht nur zu großen Einsparungen an Wasser führt, sondern darüber hinaus große Energieeinsparungen bringt. Es ist nicht erforderlich, das Wasser durch Pumpen mit hohem Druck in die Schläuche einzuspeisen. Es reicht völlig aus, wenn das Wasser mit einem gewissen hydrostatischen Druck in den Schläuchen steht. Dies bedeutet, daß man das Wasser, welches im Erdreich verteilt werden soll, je nach Bedarf in auf dem Rasen oder Acker verteilten Vorratsgefäßen einfüllen und diese dann in mehr oder weniger großen Abständen nach Bedarf nachfüllen kann. Es hat sich gezeigt, daß es beispielsweise für die Bewässerung von Rasen ausreichend sein kann, wenn man z. B. alle 3 Tage das Vorratsgefäß mit Wasser nachfüllt. Deshalb ist die unterirdische Bewässerung gemäß der Erfindung mit sehr geringen Arbeitskosten verbunden.

Gegenüber einer überirdischen Bewässerung und bekannten unterirdischen Bewässerungssystemen arbeitet das System gemäß der Erfindung mit erheblich reduzierten Flüssigkeitsmengen. Im allgemeinen liegt der Wasserverbrauch gegenüber überirdischer Bewässerung so niedrig, daß man allenfalls $1/7$ oder weniger der sonst benötigten Wassermenge einzusetzen hat, um mindestens die gleichen Erfolge zu erzielen. Verluste durch Verdunsten treten nicht auf; auch kann die Wassermenge so reguliert werden, daß ein Versickern von kostbarer Flüssigkeit vermieden wird. Der Gefahr einer Versalzung kann mit der Erfindung entgegengetreten werden. Ein Überfluten an bestimmten Stellen z. B. wegen zu großer Öffnungen findet nicht statt.

Das Bewässerungssystem gemäß der Erfindung ist deshalb besonders geeignet für aride Gebiete, in denen man mit Wasser sehr haushalten muß, beispielsweise in Wüstengebieten, in denen praktisch kein oder nur sehr wenig Niederschlag fällt.

Das System gemäß der Erfindung eignet sich nicht nur für die Bewässerung, sondern ist auch geeignet, den Erdboden z. B. mit gelösten Düngemitteln zu tränken. Da eine äußerst feine Verteilung stattfindet und der Dünger direkt an die Wurzel der Pflanze gebracht werden kann, ist es möglich, mit einem erheblich reduzierten Anteil an Düngemitteln zu arbeiten. Man erzielt dabei die gleichen Erfolge bzw. noch bessere Erfolge, als wenn man eine mehrfache Menge des Düngemittels direkt auf den Erdboden überirdisch einsetzt.

Auch Pflanzenschutzmittel bzw. Schädlingsbekämpfungsmittel können über das System gemäß der Erfindung im Erdreich verteilt werden. Auch hier ist es möglich, mit äußerst geringen Konzentrationen zu arbeiten, so daß man diesen Vorgang zugleich mit der Bewässerung kombinieren kann. Wegen der günstigen aktiven Verteilung kann man die Zusatzmittel quasi in homöopatischen Dosierungen im Boden verteilen.

Besonders überraschend war ferner, daß sich gemäß der Erfindung auch glasfaserverstärkte Schläuche einsetzen lassen. Dabei wurden übliche glasfaserverstärkte Extrusionstypen, z. B. glasfaserverstärktes Polypropylen mit einer entsprechenden geeigneten inerten Flüssigkeit verarbeitet, wobei es sich von selbst versteht, daß lediglich die Flüssigkeit und das Polypropylen ein homogenes System miteinander bilden und die darin dispergierten Glasfasern als Phase unberücksichtigt bleiben. Auf diese Weise ist es möglich noch günstigere Bestdruckwerte zu erhalten.

Da die Schläuche sowohl in radialer Richtung als auch in Längsrichtung eine sehr günstige Verteilung von vielen hintereinander bzw. nebeneinanderliegenden Poren aufweisen, von denen viele Durchmesser von der Größenordnung 1 μm besitzen, ist die Wasseraustrittsgeschwindigkeit sehr konstant und gleichmäßig über die Länge des Schlauches. Auch werden kurzzeitige Druckschwankungen aufgefangen.

Die Schläuche lassen sich an jede Leitung anschließen, wobei ein eventuell zu hoher Druck mit Hilfe eines Reduzierventils verringert werden kann. Die Flußraten lassen sich durch die Wahl des Druckes steuern; man kann aber auch durch das Einstellen des Porenhohlraumvolumenanteils bei der Herstellung der Schläuche die Flußrate beeinflussen. Der Porenhohlraumvolumenanteil steigt, wenn bei der Extrusion des homogen Gemisches der Anteil der inerten Flüssigkeit erhöht wird.

Die Erfindung wird durch folgendes Beispiel näher erläutert.

Zwei benachbarte Rasenflächen mit den Maßen von 1 m × 5 m wurden über einen Versuchszeitraum von einigen Monaten miteinander verglichen, wobei die eine Fläche konventionell, d. h. mit einer Gießkanne, die andere durch ein erfindungsgemäßes unterirdisches System bewässert wurde.

Ein poröser Polypropylenschlauch aus nichtexpandiertem Material mit einem Porenhohlraumvolumenanteil von 75%, hergestellt durch Extrusion eines homogenen Gemisches von 75 Gew.-%, N,N-2-Hydroxyäthyl-hexadecylamin und 25 Gewichtsprozent Polypropylen, Schmelzindex 1,5 bei einer Temperatur von ca. 200°C durch eine Schlauchdüse in ein Wasserbad von Zimmertemperatur, wobei in den Innenteil der Düse Stickstoff eingeleitet wird, und anschließendes Extrahieren mit Äthanol, mit einem Innendurchmesser von 6,5 mm und einem Außendurchmesser von 8,0 mm wird als Strang in einem Abstand von 25 cm auf eine Polyamidmatte mit den Ausmaßen 1 m × 5 m verlegt. Die Polyamidmatte ist erhältlich nach einem in der DE-A-2 530 499 beschriebenen Verfahren. Sodann wird mit 5 cm Erdreich beschichtet. Das Ende des Schlauches ist verschlossen. Die Verlegung des Schlauches erfolgt derart, daß in Längsrichtung drei Schlauchabschnitte parallel liegen und zu den beiden Rändern des Rasenabschnittes noch ein Abstand von 25 cm gegeben ist.

Die Wasserversorgung erfolgt durch einen etwa in etwa 1 m Höhe aufgestellten Vorratstank. Durch entsprechendes Öffnen eines Ventils wurde dem Schlauch eine Menge von 1 bis 2 l Wasser/Tag zugeführt.

Beide Flächen wurden gleichzeitig eingesät. Für ein annähernd gleiches Wachstum mußte für die Fläche, welche mit der Gießkanne gegossen wurde, die zehnfache Wassermenge eingesetzt werden.

Gemäß der Erfindung lassen sich zahlreiche Polymere in Form der Schläuche verwerten. Geeignet sind auch Polymere mit hydrophilem Charakter z. B. Polyamide, insbesondere Polyamid 6.

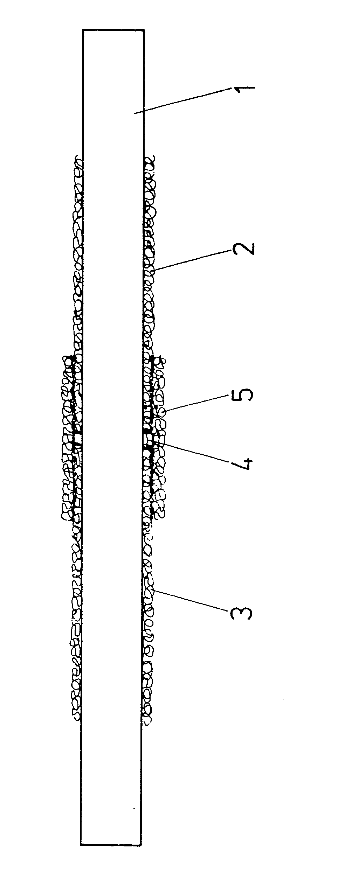

**Patentansprüche**

1. System für die künstliche unterirdische Bewässerung oder Tränkung von Böden mit flexiblen Schläuchen aus porösem Material, gekennzeichnet durch Schläuche aus synthetischen Polymeren mit einer nicht expandierten porösen Innenstruktur, bei der im wesentlichen spärische Zellen eines mittleren Durchmessers von etwa 0,5 bis etwa 100 μm gleichmäßig in der ganzen Struktur verteilt sind, wobei die angrenzenden Zellen untereinander durch Poren verbunden sind, die einen kleineren Durchmesser aufweisen als die besagten Zellen und das Verhältnis des durchschnittlichen Zellendurchmessers zum durchschnittlichen Porendurchmesser etwa 2 : 1 bis etwa 200 : 1 beträgt.

2. System nach Anspruch 1, gekennzeichnet durch Schläuche, welche erhalten worden sind durch Extrusion eines homogenen Gemisches aus mindestens 2 Komponenten, wobei die eine Komponente ein schmelzbares Polymer und die andere Komponente ein gegenüber dem Polymeren inerte Flüssigkeit ist und beide Komponenten ein binäres System bilden, das im flüssigen Aggregatzustand einen Bereich völliger Mischbarkeit und einen Bereich mit Mischungslücke aufweist.

3. System nach Anspruch 1 oder 2, gekennzeichnet durch Schläuche aus synthetischen Polymeren mit einer nicht expandierten porösen Innenstruktur, einer Innenwandoberfläche mit offenen Poren und offenen spärischen Zellen (Hohlräume) und einer Außenwandoberfläche, deren Öffnungsgrad, berechnet als Anteil offener Fläche, gegenüber der Innenwandoberfläche um mindestens 20% reduziert ist.

4. System nach Anspruch 1 bis 3, gekennzeichnet durch Schläuche, deren geöffnete Hohlräume auf der Außenwandoberfläche zum größten Teil einen Hohlraumdurchmesser von weniger als 4 μm aufweisen.

5. System nach Anspruch 4, gekennzeichnet durch einen Hohlraumdurchmesser von weniger als 3 μm.

6. System nach den Ansprüchen 1 bis 5, gekennzeichnet durch Schläuche mit einem Hohlraumvolumen von 50 bis 90%.

7. System nach Anspruch 6, gekennzeichnet durch ein Hohlraumvolumen von 70 bis 80%.

8. System nach den Ansprüchen 1 bis 7, gekennzeichnet durch Schläuche aus Polypropylen.

9. System nach Anspruch 8, gekennzeichnet durch glasfaserverstärktes Polypropylen.

10. System nach den Ansprüchen 1 bis 9, gekennzeichnet durch Schläuche mit Wandstärken von ca. 0,5 bis 2,5 mm und Außendurchmesser von ca. 2,5 bis 25 mm.

11. System nach Anspruch 10, gekennzeichnet durch Wandstärken von ca. 1 bis 1,5 mm Außendurchmesser von ca. 7 bis 12 mm.

12. System nach den Ansprüchen 1 bis 11, dadurch gekennzeichnet, daß die Schläuche in rohrförmig ausgestalteten Schutzhüllen aus einer Mattenbahn angeordnet sind, die aus einer Vielzahl von aus synthetischen Polymeren schmelzgesponnenen, sich stellenweise überkreuzenden und an den Kreuzungsstellen miteinander verschweißten Fäden besteht.

13. System nach Anspruch 12, gekennzeichnet durch Schutzhüllen aus einer Mattenbahn mit Längsrillenprofil.

14. System nach den Ansprüchen 12 bis 13, gekennzeichnet durch eine Mattenbahn aus Polycaprolactamfäden mit einem Durchmesser von ca. 0,2 bis 1,5 mm.

15. System nach den Ansprüchen 12 bis 14, gekennzeichnet durch Muffen, die aus dem gleichen Material wie die Schutzhüllen bestehen und die an den Stoßstellen der Schutzhüllen angeordnet sind.

16. Verwendung des Systems nach den Ansprüchen 1 bis 15 zur Bewässerung von Rasen.

17. Verwendung des Systems nach den Ansprüchen 1 bis 15 zur Bewässerung in mehreren Schichten.

18. Verwendung des Systems nach den Ansprüchen 1 bis 15 zur Permanentbewässerung in ariden Zonen.

19. Verwendung des Systems nach den Ansprüchen 1 bis 15 zur Verteilung von Düngemitteln.

20. Verwendung des Systems nach den Ansprüchen 1 bis 15 zur Verteilung von Herbiziden.

21. Verwendung des Systems nach den Ansprüchen 1 bis 15 zur Verteilung von Schädlingsbekämpfungsmitteln.

## Claims

1. A system für the artificial underground irrigation or watering of soils using flexible hoses of porous material, characterized by hoses of synthetic polymers having a nonexpanded porous inner structure, in which substantially spherical cells having an average diameter of from about 0.5 to about 100 µm are uniformly distributed throughout the structure, the adjoining cells being interconnected by pores smaller in diameter than said cells and the ratio of the average cell diameter to the average pore diameter being about 2 : 1 to about 200 : 1.

2. A system as claimed in Claim 1, characterized by hoses which have been obtained by extrusion of a homogeneous mixture of at least two components of which one is a fusible polymer and the other a liquid inert to the polymer, the two components forming a binary system which, in the liquid aggregate state, has a region of complete miscibility and a region with a miscibility gap.

3. A system as claimed in Claim 1 or 2, characterized by hoses of synthetic polymers having a non-expanded porous inner structure, an inner wall surface with open pores and open spherical cells (voids) and an outer wall surface of which the degree of opening, expressed as a percentage of open area, is reduced by at least 20% in relation to the inner wall surface.

4. A system as claimed in Claims 1 to 3, characterized by hoses of which the opened voids on the outer wall surface mostly have a void diameter of less than 4 µm.

5. A system as claimed in Claim 4, characterized by a void diameter of less than 3 µm.

6. A system as claimed in Claims 1 to 5, characterized by hoses having a void volume of from 50 to 90%.

7. A system as claimed in Claim 6, characterized by a void volume of from 70 to 80%.

8. A system as claimed in Claims 1 to 7, characterized by hoses of polypropylene.

9. A system as claimed in Claim 8, characterized by glass-fiber-reinforced polypropylene.

10. A system as claimed in Claims 1 to 9, characterized by hoses having wall thickness of from about 0.5 to 2.5 mm and an external diameter of from about 2.5 to 25 mm.

11. A system as claimed in Claim 10, characterized by wall thickness of from about 1 to 1.5 mm and an external diameter of from about 7 to 12 mm.

12. A system as claimed in Claims 1 to 11, characterized in that the hoses are arranged in tubular protective sleeves of web-form matting which consists of a plurality of filaments melt-spun from synthetic polymers which locally cross over one another and which are welded together where they cross.

13. A system as claimed in Claim 12, characterized by protective sleeves of a web-form mat having a longitudinally grooved profile.

14. A system as claimed in Claims 12 and 13, characterized by a web-form mat of polycaprolactam filaments having a diameter of from about 0.2 to 1.5 mm.

15. A system as claimed in Claims 12 to 14, characterised by sockets which are made of the same material as the protective sleeves and which are arranged over the joins between the protective sleeves.

16. The use of the system claimed in Claims 1 to 15 for lawn irrigation.

17. The use of the system claimed in Claims 1 to 15 for irrigation in several layers.

18. The use of the system claimed in Claims 1 to 15 for permanent irrigation in arid zones.

19. The use of the system claimed in Claims 1 to 15 for distributing fertilizers.

20. The use of the system claimed in Claims 1 to 15 for distributing herbicides.

21. The use of the system claimed in Claims 1 to 15 for distributing pesticides.

## Revendications

1. Système pour l'irrigation ou imprégnation souterraine artificielle de sols au moyen de tuyaux flexibles en un matériau poreux, caractérisé par des flexibles en polymères synthétiques ayant une structure interne poreuse non expansée, où des cellules sensiblement sphériques d'un diamètre moyen d'environ 0,5 à environ 100 µm sont réparties régulièrement dans l'ensemble de la structure, les cellules adjacentes étant reliées entre elles par des pores présentant un diamètre inférieur à celui de ces cellules, et le rapport du diamètre moyen des cellules au diamètre moyen des pores étant d'environ 2 : 1 à environ 200 : 1.

2. Système selon la revendication 1, caractérisé par des flexibles qui ont été obtenus par l'extrusion d'un mélange homogène d'au moins 2 composants, l'un des composants étant un polymère fusible, et l'autre composant un liquide inerte vis-à-vis du polymère, et les deux composants formant un système binaire qui présente à l'état liquide un domaine de miscibilité totale et un domaine de démixtion.

3. Système selon la revendication 1 ou 2, caractérisé part des flexibles en polymères synthétiques ayant une structure interne poreuse non expansée, une surface de paroi interne avec des pores ouverts et des cellules sphériques ouvertes (cavités), et une surface de paroi externe dont le degré d'ouverture, calculé en tant que pourcentage de surfaces ouvertes, est réduit d'au moins 20% par rapport à celui de la surface de la paroi interne.

4. Système selon l'une quelconque des revendications 1 à 3, caractérisé par des flexibles dont les cavités ouvertes prévues sur la surface de la paroi externe présentent dans leur majorité un diamètre inférieur à 4 µm.

5. Système selon la revendication 4, caractérisé par un diamètre des cavités inférieur à 3 µm.

6. Système selon l'une quelconque des revendications 1 à 5, caractérisé par des flexibles ayant un volume de cavités de 50 à 90%.

7. Système selon la revendication 6, caractérisé par un volume de cavités de 70 à 80%.

8. Systéme selon l'une quelconque des revendications 1 à 7, caractérisé par des flexibles en polypropylène.

9. Système selon la revendication 8, caractérisé par du polypropylène renforcé de fibres de verre.

10. Système selon l'une quelconque des revendications 1 à 9, caractérisé par des flexibles ayant une épaisseur de paroi d'environ 0,5 à 2,5 mm et un diamètre externe d'environ 2,5 à 25 mm.

11. Système selon la revendication 10, caractérisé par des épaisseurs de paroi d'environ 1 à 1,5 mm et des diamètres externes d'environ 7 à 12 mm.

12. Système selon l'une quelconque des revendications 1 à 11, caractérisé par le fait que les flexibles sont disposés dans des gaines configurées sous une forme tubulaire à partir d'une bande de mats qui est constituée d'une multiplicité de fils de polymères synthétiques qui sont filés à chaud, qui se croisent par endroits, et qui sont soudés les uns aux autres aux points d'intersection.

13. Système selon la revendication 12, caractérisé par des gaines réalisées à partir d'une bande de mats ayant un profil rayuré longitudinalement.

14. Système selon la revendication 12 ou 13, caractérisé par une bande de mats en fils de polycapro-lactame ayant und diamètre d'environ 0,2 à 1,5 mm.

15. Système selon l'une quelconque des revendications 12 à 14, caractérisé par des manchons qui sont constitués du même matériau que les gaines, et qui sont disposés aux points de jonction des gaines.

16. Application du système selon l'une quelconque des revendications 1 à 15 à l'irrigation de pelouses.

17. Application du système selon l'une quelconques des revendications 1 à 15 l'irrigation en plusieurs couches.

18. Application du système selon l'une quelconque des revendications 1 à 15 à l'irrigation permanente dans des régions arides.

19. Application du système selon l'une quelconque des revendications 1 à 15 à la distribution d'engrais.

20. Application du système selon l'une quelconque des revendications 1 à 15 à la distribution d'herbicides.

21. Application du système selon l'une quelconque des revendications 1 à 15 à la distribution de produits phytosanitaires.